# EUROPEAN PATENT APPLICATION

(11) **EP 1 361 705 A1**
(43) Date of publication of application: **12.11.2003**
(21) Application number: 02291146.5
(22) Date of filing: 07.05.2002
(51) Int. Cl.: H04L 12/56, H04Q 11/04

(54) **Method for forwarding data packets as cell sequences within a subnetwork of a data packet network**

(71) Applicant: ALCATEL, 75008 Paris (FR)
(72) Inventor: Henrion, Michel André Robert, 92100 Boulogne-Billancourt (FR)
(74) Representative: Narmon, Gisèle Marie Thérèse

(57) **Abstract**

A method is described for forwarding a data packet within a subnetwork (S) of interconnected cell switching nodes (1,2,3,4), surrounded by edge packet routers (A,B,C,D,E), which are further surrounded and part of a data packet network of routers. Said data packet enters said subnetwork via an ingress edge packet router (B), passes through at least one cell switching node (1), and leaves it via at least one destination egress edge packet router (A,C,D,E). The method includes the steps of associating a destination forwarding tag to said data packet, of deriving a sequence of fixed length cells for further transmission to said at least one cell switching node (1), of dynamically analyzing said destination forwarding tag for elaborating a packet cell forwarding decision applicable to all cells of said sequence, and thereby performing a subsequent transfer action of said all cells, to at least one outgoing link. Essential is that each edge packet router is assigned a distinct local edge router identity, specific of said subnetwork, and that said destination forwarding tag includes at least one destination egress edge router local identifier which is related to said local edge router identity of the destination egress edge packet routers (A,C,D,E). Ingress edge packet routers and cell switching node adapted to perform this method are also described.

## Description

The present invention relates to a method for forwarding a data packet within a subnetwork of a data packet network as is further described in the preamble of claim 1.

Such a method is already known in the art, e.g. from *an email distributed on the mailing list of the ATM Forum, on Tuesday 21 of July 1998, by RAJEEV and with subject "AF-CS-SAA-TCAG : RE: Comments on UNITE (Lightweight signaling) : at m98-0520".* In this email relating to a discussion on CLS which is the abbreviation of ConnectionLess Signaling, an idea was proposed whereby, when a sequence of ATM cells corresponding to a data packet, herein called an ATM datagram, needs to be transmitted, it is sent on a reserved VPI/VCI using the AAL3/4 ATM adaptation layer. Besides, for each new ATM datagram, a new multiplexing identifier is chosen for delimiting the cell sequence, and the datagram header is such that the first ATM cell of the datagram cell sequence carries the destination NSAP address. At each intermediate ATM switch, when a new multiplexing identifier is seen, the corresponding datagram is forwarded on the basis of the destination NSAP address. NSAP is the abbreviation of Network Service Access Point, which is an internationally agreed address of a node in a large network, as specified by the ISO/IEC norm 8348.

The NSAP address is however up to 20 bytes long. In case of a multicast packet transfer, several of these NSAP addresses, one for each individual destination router, should thus be included in the first ATM cell according to this mechanism. However, given the 48-byte size of an ATM cell, and because of the size of such an NSAP address, typically 20-byte long, only a very limited number, in this example being 2, of such NSAP addresses can be used for multicasting. This prior art method is thus mainly suitable for transferring unicast packets.

An object of the present invention is therefore to provide a method for forwarding a data packet as a sequence of cells of the above known type, but which is also applicable for multicasting a packet to a large number of destination routers within a subnetwork.

According to the invention, this object is achieved due to the fact that, to each one of the edge packet routers of the subnetwork, is assigned a distinct local edge router identity which is specific of said subnetwork, and that the destination forwarding tag, associated to the data packet, includes at least one destination egress edge router local identifier, which is related to said distinct local edge router identity, assigned to at least one destination egress edge packet router,

In this way, by the use of a destination egress edge router local identifier, locally and specifically defined for designating each destination egress packet router within the subnetwork, the destination forwarding tag associated to the data packet can be encoded in a much more compact way in comparison with a tag that would use NSAP international addresses, so that extended packet multicasting is achievable within this subnetwork.

Other characteristic features of the present invention are described in claims 2 to 4.

These claims present alternatives of how such an at least one destination egress edge router local identifier can be inserted in the derived sequence of cells. In particular, including it within one or more first (dedicated) cells thereby offers a simple straightforward solution for further forwarding the packet through the subnetwork.

A further characteristic feature of the present invention is described in claim 5.

For expressing the destination egress edge router local identifiers in the destination forwarding tag, a bit-based approach is thereby exploited to its maximum, resulting in the maximum number of multicast destinations, in a very simple way. The number of destination egress routers can thereby still be increased by using more than one header cell per packet.

A further characteristic features of the present invention is mentioned in the claim 6.

A code-based approach can be alternatively used for expressing the destination egress edge router local identifiers, which is suitable for transferring unicast, as well as multicast packets to a small number of destination edge routers.

Another characteristic feature of the present invention is described in claim 7.

Filtering the destination egress edge router local identifiers in each cell switching node provides an essential step in efficiently transferring multicast packets with the proposed packet cell forwarding mechanism.

Claims 8 and 9 describe advanced notice possibilities which allow to speed up the process.

The invention relates as well to an ingress edge packet router and a cell switching node that are capable of performing necessary steps for performing this packet cell forwarding method, as are described in claims 10 to 1 7, and 18 to 22 respectively.

The above and other objects and features of the invention will become more apparent and the invention itself will be best understood by referring to the following description of an embodiment taken in conjunction with the accompanying drawings wherein:
FIG. 1 represents a subnetwork S wherein the present invention is used,
Fig. 2 represents an example of a unicast packet transfer between two edge packet routers within the subnetwork of Fig. 1,
Fig. 3 represents an example of a multicast packet transfer from one ingress edge packet router to 4 egress edge packet routers within the subnetwork of Fig. 1, and
Fig. 4 represents several variants of the method and ways for switching over between these two variants.

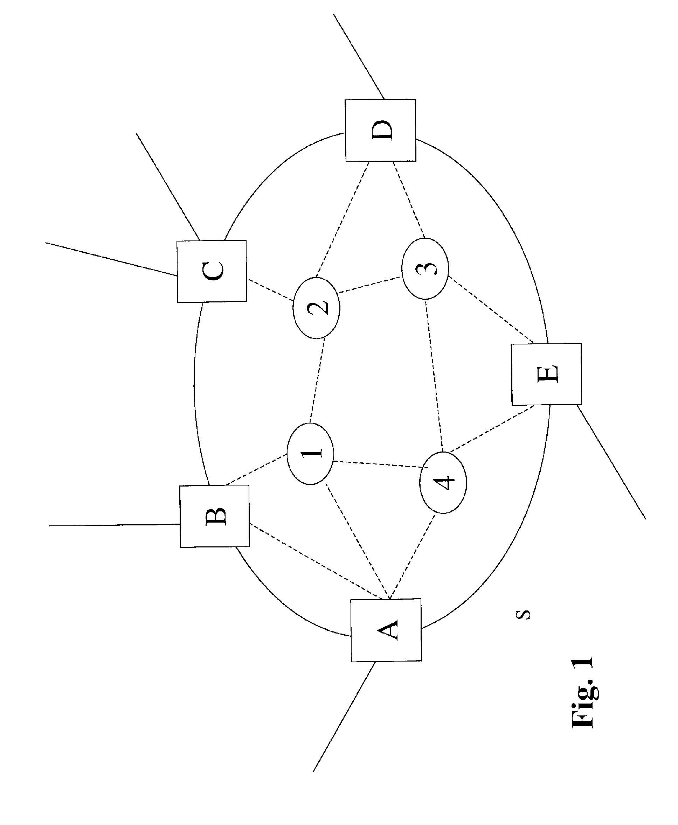

The present invention primarily deals with the transfer of data packets, such as IP packets, within a communication subnetwork, such as subnetwork S of Fig. 1, and consisting of a first plurality of cell switching nodes denoted 1 to 4, which are surrounded by a second plurality of edge packet routers, denoted A to E and also part of this subnetwork. This subnetwork is further surrounded by and forming part of a larger data packet network of routers, such as the Internet. This is however not shown on Fig.1, the only reference to the surrounding larger data packet network being indicated by means of the external links indicated by the short full lines to and from the edge packet routers. The edge or edge packet routers of this subnetwork are basically capable of layer 3 packet forwarding, typically using a classical IP protocol, and they are further interconnected by these cell switching nodes within subnetwork S through which each data packet is transferred as a sequence of cells. Such cell switching nodes may be capable of conventionally switching cells, for instance in the classical connection-oriented way that ATM switches are switching ATM cells. Yet it will be seen that, for implementing the packet cell forwarding method of the invention, such a regular connection-oriented cell switching capability is not necessarily assumed in the cell switching nodes. Also no particular assumption is made as concerns the configuration of this subnetwork: the number of cell switching nodes can be anyone, but at least one, and the interconnecting links, between them or to/from the edge routers, can be laid out according to any trunking topology.

The main advantage of approaches consisting in transferring data packets as sequences of cells through such a subnetwork within the Internet, is to exploit the fast switching capabilities of cell-based, typically ATM, technologies, for improving the performance/cost ratio of these packet communication networks.

A classical known example of IP over ATM approach is the one based on the MPLS (Multi-Protocol Label Switching) principle applied to a subnetwork of ATM switching nodes. Thereby, in such ATM nodes, the standard ATM cell switching functionalities are used as an infrastructure technology as concerns the connection-oriented transport of packet cells, while dedicated MPLS protocols are provided for supporting the control of possible routing paths for setting up connections through the ATM subnetwork. Thus in such a current prior art approach, a connection-oriented transfer mechanism is used to switch standard ATM cells, so that a set of ATM connections needs to be pre-established to interconnect the various couples of ingress and egress edge packet routers of the subnetwork. Then, for each sequence of cells corresponding to a data packet to be transferred through the subnetwork, the related ATM cells are individually switched over the particular ATM connection which has been pre-established between the concerned routers. When the number N of edge packet routers in a subnetwork is relatively large, the need for pre-establishing connections between edge packet routers may lead to scalability problems in terms of number of internal connections required to interconnect them. By only considering the requirement for unicast packet transfers, it would already imply N x [N-1] point-to-point connections, or N multipoint-to-point connections if the ATM switching nodes are capable of properly merging the cells of different packet cell sequences originating from different ingress edge packet routers. Clearly, for performing multicast transfers, the required number of point-to-multipoint, or multipoint-to-multipoint, connections would be even much larger and thus too often excessive.

This explains why such a current prior art MPLS approach, applied to a subnetwork of standard ATM cell switching nodes, can essentially support unicast packet transfers, but no general solution is offered for efficiently transferring both unicast and multicast packets. The present invention proposes a new method for transferring data packet over a cell-based infrastructure subnetwork, typically offering an alternative type of IP over ATM approach, which allows to significantly improve the above limitations.

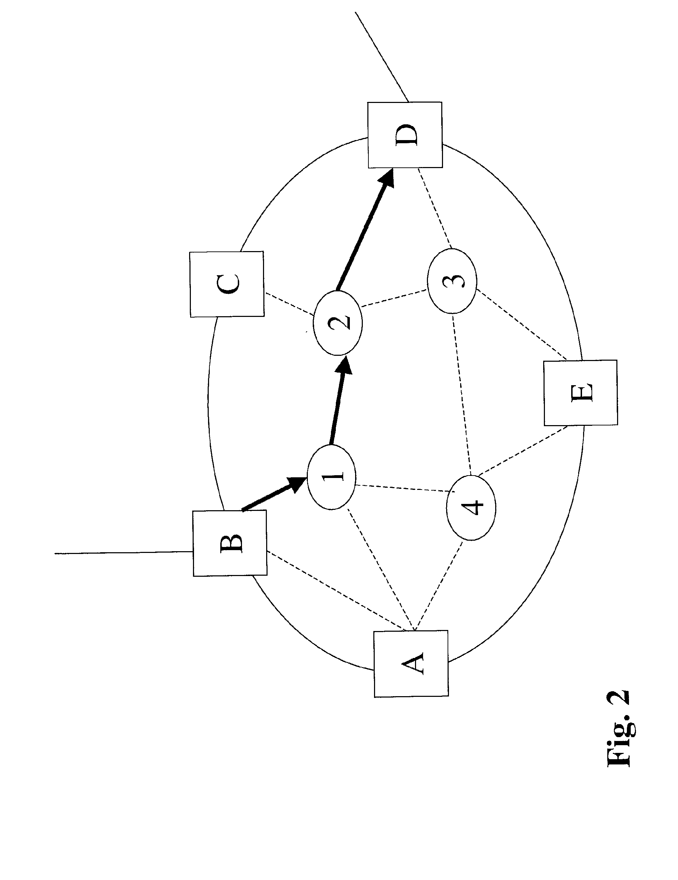

In the unicast packet forwarding situation depicted in Fig. 2, a packet transmitted from a source terminal (not shown on Fig. 2), to a destination terminal (also not shown on Fig. 2) of this data packet network, is supposed to enter the subnetwork at edge packet router B, here called ingress edge packet router and denoted IEPR, and to leave this subnetwork at edge packet router D, here called egress edge packet router and denoted EEPR. Source and destination terminals can for instance be computer terminals coupled to the Internet, in which, based on some typical IP routing protocols, successive forwarding actions have lead to the situation of this data packet arriving at the ingress edge packet router IEPR B. As in a classical packet router, the IEPR router B analyzes the header of the received data packet and, based on the current contents of its forwarding tables, the resulting decision assumed in Fig. 2 is that the packet should be further forwarded towards the egress edge packet router EEPR D, thus through subnetwork S, over a given outgoing link. Various packet routing protocols may be used for configuring the forwarding tables used in the IEPR routers, but these routing protocols are beyond the scope of this invention and will not be further discussed.

For subsequently transferring this considered data packet through subnetwork S from IEPR router B to EEPR router D, if using the above mentioned current prior art MPLS approach applied to a subnetwork of standard ATM cell switching nodes, the cells of the corresponding packet cell sequence would then be transmitted over an ATM connection pre-established from router B to router D, and would be conventionally switched as individual cells in ATM switching nodes 1 and 2. Instead of using such a connection-oriented transfer principle, the method of the invention thereby consists in transferring the cells of the corresponding packet cell sequence, hop-by-hop through the cell switching nodes, by using a connectionless transfer principle based on a dynamic destination-based packet cell forwarding mechanism.

A first key aspect of the proposed method thereby consists of using a distinct local edge router identity, abbreviated with LERI, which is assigned to each edge packet router of the subnetwork, whereby all these LERI identities are specific for this subnetwork S. Whereas all edge packet routers may be also identifiable by their international NSAP address, which is 20 bytes long, this value will not be used in the present invention. Instead only a local edge router identity LERI, specific to this subnetwork S, is used for identifying each one of its edge packet routers. Thus for a subnetwork comprising N edge packet routers, only a reduced number of N distinct LERI identities are sufficient for properly characterizing the transfer of any given data packet between edge packet routers via this subnetwork, for instance only using five distinct LERI identities (N = 5) for identifying the edge packet routers A, B, C, D, and E in the example of Fig. 1 or 2. Thus the packet transfer case within subnetwork S in Fig. 2, from ingress edge packet router B to egress edge packet router D, is characterized by the respective LERI identities specifically assigned to these edge packet routers.

As above mentioned, a complementary key aspect of the present invention is that, for transferring the cells of a packet cell sequence through the cell switching nodes towards one or more destination egress edge packet routers of the subnetwork, a packet cell forwarding mechanism is used in the cell switching nodes thereof, instead of using a conventional connection-oriented cell switching mechanism according to ATM standards. Then, for transmitting the packet cell sequence on an appropriate outgoing link, this packet cell forwarding mechanism consists in elaborating a forwarding decision, by analyzing a destination forwarding tag designating the concerned one or more egress edge packet routers (several in case of multicast packet), for instance egress edge packet router D in the example of unicast packet transfer illustrated in Fig. 2. This packet cell forwarding decision in a cell switching node is based on the current contents of a simple forwarding table memory. Various routing protocols may be used for configuring the forwarding table memory used in the cell switching nodes-, but these routing protocols are beyond the scope of this invention and will not be further discussed.

Accordingly, in an ingress edge packet router, after having made the forwarding decision for an arriving data packet, and thereby determined the identity of the one or more destination edge egress packet routers concerning that data packet, the latter packet is changed into a sequence of cells, for instance ATM cells, such that this sequence also incorporates an associated destination forwarding tag which designates the identity of these one or more destination egress edge packet routers. To this purpose, a destination forwarding tag is associated to the data packet. This destination forwarding tag includes a destination edge router field, denoted DERF, allowing to set the one or more destination egress edge router local identifiers, denoted DEERLI, for that data packet. These one or more DEERLI identifiers are related to the aforementioned local LERI identities respectively designating each one of these one or more destination egress edge packet routers concerning that packet among the various edge packet routers of the subnetwork.

In the destination forwarding tag, the one or more destination egress edge router local identifiers (DEERLI), set in the destination edge router field (DERF), can be expressed by using either a bit-based or a code-based approach.

In the bit-based approach, the DERF field comprises a sequence of edge router bits, denoted ERB, each distinct bit position thereof being associated to a distinct local edge router identity (LERI) assigned to each one of the egress edge packet routers of the subnetwork. The value of each ERB bit indicates whether the corresponding edge packet router is a destination egress edge packet router, so that each active ERB bit corresponds to one DEERLI identifier for the related packet cell sequence.

In the code-based approach, the DERF field comprises a list of one or more destination egress edge router codes, denoted DEERC, each distinct DEERC code present in the DERF field corresponding to a destination egress edge packet router, so that each explicit DEERC code corresponds to one DEERLI identifier for the related packet cell sequence.

After having determined the one or more DEERLI identifiers to be set in the destination forwarding tag, the ingress edge packet router elaborates a sequence of cells which is derived from the destination forwarding tag and from the original data packet itself.

Several construction variants are possible for elaborating this packet cell sequence :
- In a first construction variant, the sequence of cells is derived by setting the DERF field, containing the one or more DEERLI identifiers, in at least one first dedicated cell (several first dedicated cells if needed) of the cell sequence, and by setting the data packet separately in the payload part of following cells of this sequence. These one or more dedicated cells are thereby dedicated to the transport of the DERF field containing the DEERLI identifiers, and they are then called packet forwarding header cells, abbreviated with PFHC. In this first variant, it is possible to accommodate, in the one or more dedicated PFHC cells, the DERF field in various ways: either in their header part or in their payload part, the latter formatting option being preferred as providing more capacity for housing a larger number of DEERLI identifiers in each dedicated PFHC cell.
- Another construction variant consists in elaborating a more compact cell sequence by accommodating both the DERF field and the data packet without isolating the DERF field in dedicated cells. For this, a first subvariant consists in setting the DERF field in the header part of one or more first cells, whilst the packet data in the payload part of all successive cells of the sequence. A second subvariant consists in setting both the DERF field and the packet data, consecutively and in that order, in the payload part of all successive cells of the sequence, the latter subvariant formatting option being preferred as providing more flexibility for housing a larger number of DEERLI identifiers in the payload part of cells.

The transformation of the data packet into a packet cell sequence can be performed by means of some conventional segmentation processes. In a preferred variant of the method, the ATM cell format is used and the packet is segmented into cells according to the classical AAL5 adaptation layer, but other types of segmentation procedures, or even other cell formats, can also be used. In the remainder of this document we will continue with the AAL5 segmentation procedure as a typical example.

In the remainder of the text, as concerns the one or more PFHC header cells, we will proceed with a typical example whereby the ATM cell format is used, and by assuming the case where these header cells are dedicated to the transport of DEERLI identifiers in the DERF field. The number of header cells to be used thereby depends on the amount of bits needed for these DEERLI identifiers, and thus indirectly depends on the number N of edge packet routers of the subnetwork. Depending on the size of the DERF field required for setting the destination egress edge router local identifiers, expressed in number of bits, one or more header cells are to be used.

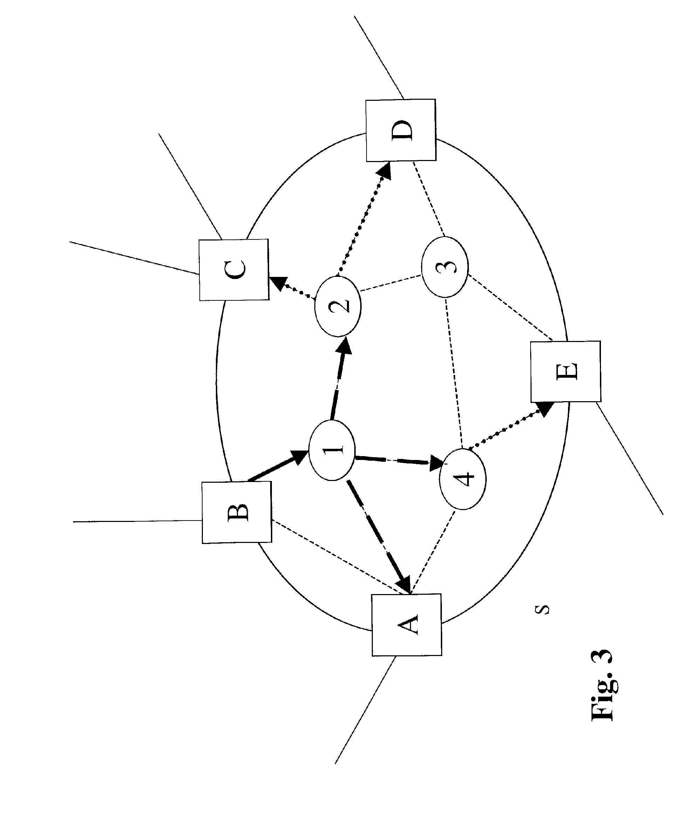

The addition of one or more supplementary cells for carrying the destination forwarding tag comprising one or more DEERLI identifiers, will introduce some additional overhead on the packet cell traffic load. However this relative penalty is outweighed by the benefits brought by further upgrading the cell-based infrastructure technology, used for forwarding the packet cells within the subnetwork, with an alternative type of cell-based, for instance ATM, transfer mechanism. As partly referred to in the mentioned prior art email, such an alternative type ATM transfer mechanism, called ATM datagram, used the NSAP address as an identifier designating the address of the destination router. Partially similar to this ATM datagram mechanism, a connectionless packet cell forwarding transfer mechanism over a cell-based, for instance ATM, infrastructure subnetwork will be further described in detail by means of the examples depicted in Figs. 2 and 3 in the following paragraphs. It will be further shown that this mechanism allows to keep packet multicasting scalable in terms of required number of links, compared to an approach using classical connection-oriented cell switching in an ATM infrastructure subnetwork.

Basically, when considering the transfer of data packets through the cell-based, typically ATM, infrastructure of a subnetwork, the proposed connectionless packet cell forwarding mechanism differs as follows from the classical connection-oriented ATM switching mechanism used in the classical IP over ATM approach based on MPLS :
- It is a hop-by-hop connectionless transfer mechanism between adjacent cell switching nodes, over a pre-assigned virtual link, VPI/VCI. This is opposed to a connection-oriented transfer mechanism over a pre-established router-to-router ATM connection.
- Accordingly, in each cell switching node, the outgoing ATM link or links to which the packet cells are to be forwarded, are dynamically determined on an individual packet cell sequence basis using the one or more DEERLI identifier in the associated destination forwarding tag. This is opposed to a determination on an individual cell basis using the VPI/VCI label in the cell header, in conventional ATM switching.

Fig. 2 illustrates an example of transfer of a unicast packet from an ingress edge packet router B, to an egress edge packet router D, successively through ATM cell switching nodes 1 and 2. In this case the ingress edge packet router B, is adapted to elaborate a packet cell sequence, by generating one PFHC cell including one DEERLI identifier designating the egress edge packet router D, as well as segmenting the data packet into cells.

In cell switching nodes 1 and 2 successively, the single DEERLI identifier, designating egress edge packet router D, contained within the PFHC cell, is used to select the appropriate outgoing ATM link connecting respectively cell switching node 1 to cell switching node 2, and cell switching node 2 to egress edge packet router D. In ingress edge packet router B, the data packet header is analyzed, in a similar way as is conventionally done in IP packet routers in the, by means of its packet forwarding table for performing the resulting forwarding decision which gives both the identity of the destination egress edge packet router D and the identity of the outgoing link to be used for outputting the packet cell sequence to the first cell switching node 1. Then in each cell switching node such as node 1 and 2, the DEERLI identifier is extracted from the PFHC cell in the cell sequence and is used to determine which outgoing link should be used to transmit the cell sequence towards egress edge packet router D. For doing so, a packet cell forwarding decision is performed in each cell switching node, by simply using the DEERLI identifier to address a DEERLI translation table memory, which then gives the identity of the outgoing link to be used in that cell switching node for outputting the packet cell sequence towards the destination egress edge packet router D.

When the packet cell sequence reaches the egress edge packet router D, the DEERLI identifier is also extracted from the PFHC cell in the sequence of cells. Analysis of this DEERLI identifier indicates that the packet cell sequence has reached its final local destination within the subnetwork. Then, the original data packet is re-generated from the sequence of cells. Subsequently, as is done in conventional IP packet routers, the data packet header is again analyzed by means of its forwarding table for performing a forwarding decision allowing to further transfer the data packet towards its final destination within the data packet network.

The above described hop-by-hop packet cell forwarding process in each cell switching node is similar to, though simpler than, the hop-by-hop packet forwarding process in data packet routers, for instance IP packet routers, in the sense that both mechanisms are connectionless. By principle, this destination-based connectionless packet cell forwarding method allows to multiplex on the same link, a virtual link characterized by its VPI/VCI value in ATM case, and various packet cell sequences not having necessarily the same destinations. In particular, one does not have to segregate all packets on different links, according to their type, unicast or multicast, and depending on their respective destinations. This is opposed to the classical connection-oriented cell switching mechanism used in an ATM infrastructure subnetwork of the aforementioned classical IP over ATM approach based on MPLS.

Fig. 3 illustrates an example of transfer of a multicast packet from ingress edge packet router B, to four egress edge packet routers, namely A,C,D and E, whereby cell switching nodes 1, 2 and 4 are used for this multicast transfer. In this case, the PFHC cell generated by the ingress edge packet router B includes four DEERLI identifiers, designating the egress edge packet routers A, C, D, and E respectively. The ingress edge packet router B, besides being capable of generating these four DEERLI identifiers and putting them in a PFHC cell (assuming one single PFHC cell to be sufficient for accommodating four DEERLI identifiers), is also further adapted to transform the data packet into a sequence of cells which are to be preceded by this PFHC cell. Furthermore this ingress router B is also adapted to determine that the packet cell sequence should only be outputted once on the outgoing link coupled to cell switching node 1. As in the case of Fig. 2, this is performed by analyzing the packet header by means of its forwarding table. In this example, the routing conditions, as currently reflected by the predetermined contents of the forwarding table, are assumed to be such that, from this ingress edge packet router B, only one single outgoing link to cell switching node 1, is adequate for reaching all 4 egress edge packet routers A, C, D and E.

However, as can be noticed in the considered example network topology, this ingress edge packet router B has also an outgoing link connecting directly to egress edge packet router A, which is one of the four egress edge packet routers concerning that multicast packet. Thus, in different routing conditions, the contents of the forwarding table could be such that the direct outgoing link connecting ingress edge packet router B to egress edge packet router A is rather used to reach the latter, whilst the outgoing link connecting ingress edge packet router B to cell switching node 1 is used for only reaching the three other egress edge packet routers C, D and E. In such an alternative situation, the ingress edge packet router B itself would already perform a multicast operation for separately transmitting a copy of the data packet to each one of the two outgoing links : as a packet cell sequence on the output link connecting to the cell switching node 1, and as a regular data packet on the direct output link connecting to the egress edge packet router A.

In the remainder of this text we will continue with the forwarding path as depicted in Fig. 3.

When the packet cell sequence arrives at cell switching node 1, the latter is adapted to extract the four DEERLI identifiers from the PFHC cell and use them to determine which outgoing link or links should be used to transmit the cell sequence to reach the four destination egress edge packet routers A, C, D and E. A packet cell forwarding decision is performed in cell switching node 1 by using these four DEERLI identifiers to address its DEERLI translation table memory, which determines that three outgoing links should be used in that cell switching node for outputting the cells of the packet cell sequence multicasted as follows :
- one copy to the outgoing ATM link to egress edge packet router A
- one copy to the outgoing ATM link to cell switching node 4
- one copy to the outgoing ATM link to cell switching node 2.

In addition to multicasting the cells, cell switching node 1 is further adapted to also change the contents of the associated PFHC cell as follows :
- the PFHC cell of the packet cell sequence transmitted to egress edge packet router A will only contain only one DEERLI identifier designating egress edge packet router A
- the PFHC cell of the packet cell sequence transmitted to cell switching node 4 will only contain only one DEERLI identifier designating egress edge packet router E
- the PFHC cell of the packet cell sequence transmitted to cell switching node 2 will contain two DEERLI identifiers designating egress edge packet routers C and D.

When the packet cell sequence arrives in egress edge packet router A, this router is adapted to extract the DEERLI identifier from the PFHC cell and to determine therefrom that the packet cell sequence has reached its final local destination within the subnetwork. From then on, conventional packet routing such as IP routing in the Internet, is further used.

When the packet cell sequence arrives in cell switching node 4, the latter is also adapted to extract and to analyze the DEERLI identifier in the PFHC cell. It uses the DEERLI identifier to address its DEERLI translation table memory, which determines the output link for further outputting the cells to egress edge packet router E.

When the packet cell sequence arrives in cell switching node 2, this node is also adapted to extract and to analyze the DEERLI identifier, and, based on the result of the subsequent packet cell forwarding decision, to multicast the packet cell sequence, and to adapt the DEERLI identifier as follows :
- one copy outputted on the outgoing ATM link coupled to egress edge packet router C, with only one DEERLI identifier designating egress edge packet router C in its PFHC cell
- one copy outputted on the outgoing ATM link coupled to egress edge packet router D, with only one DEERLI identifier designating egress edge packet router D in its PFHC cell.

Finally, the EEPR routers C, D and E will also find that the packet cells have reached their final local destination within the subnetwork. From then on, conventional packet forwarding is resumed for transferring the data packet towards respective destinations in the packet network.

From the above two examples, it is clear that the forwarding paths which are used for transferring a multicast packet through a subnetwork to several destination egress edge packet routers, are selected over the same spanning tree as for transferring individual unicast packet to anyone of these destination egress edge packet routers, as reflected by the current state of hop-by-hop reachability forwarding decisions preset by the routing protocols in the DEERLI forwarding table memories of each cell switching node. Accordingly, this spanning tree, which depends upon both the subnetwork topology and the current state of forwarding tables in the nodes, may well imply a multicast forwarding path with more than one branching level, in which case (as in the example of Fig. 3) the multicast forwarding of the packet cell sequence takes place in more than one node. In such a case, in order to avoid that several copies of the packet cell sequence may be transmitted to the same egress edge packet router over alternative forwarding paths, the DEERLI identifiers, in the one or more PFHC header cells of a packet cell sequence transmitted over a given output link, should be filtered in such a way that the only DEERLI identifiers left in the transmitted PFHC cells are those corresponding to one or more remaining destination egress edge packet routers.

In the ingress edge packet routers, when compared with a classical packet router, additional capabilities are needed for elaborating the packet cell sequence, by segmenting the incoming data packet into cells, and for adding one or more dedicated PFHC header cells containing the appropriate destination forwarding tag, before transmitting the packet cell sequence on the one or more selected output links.

In each cell switching node, when compared with the classical connection-oriented cell switching functionalities such as in a conventional ATM switch, the functional capabilities required for performing the proposed packet cell forwarding mechanism can be summarized as follows :
- recognize, in the stream of incoming cells, the one or more dedicated first (header) cells used to transport the destination forwarding tag associated to the data packet
- extract, from the destination edge router field DERF of this destination forwarding tag, the one or more destination egress edge router local identifiers DEERLI concerning the packet cell sequence
- determine, from these one or more DEERLI identifiers and by using its DEERLI forwarding table memories, over which one or more output links, of the cell switching node, the packet cell should be transmitted towards the corresponding one or more egress edge packet routers
- dynamically set up , within the cell switching node if or when needed, a transfer mechanism for transferring the sequence of cells to each one of the one or more determined output links
- subsequently transfer the sequence of cells to these one or more determined output links, and
- update, for each one of these output links, the one or more DEERLI identifiers in the one or more dedicated header PFHC cells of the packet cell sequence, so that the only DEERLI identifiers left are those corresponding to one or more remaining destination EEPR routers.

Some of the above functionalities imply time-critical data processing tasks, especially the determination of the output ports, the dynamic set-up of through-switch transfer mechanisms especially in multicast case, and the selective DEERLI filtering in the PFHC cells. However it is feasible to perform them dynamically for each packet cell sequence in real-time by implementing them by means of high speed hardware technology, as will be discussed in a further paragraph. For instance the DEERLI identifier can be translated in a table memory giving the corresponding output switch port of outgoing ATM link, in a similar way as used for translating the incoming VPI/VCI values for internal through-switch transfer in classical ATM cell switching.

Various ways can be conceived for recognizing a dedicated first cell, such as a PHFC, for instance on each preset or default ATM virtual link which is used for carrying packet cell sequences through the subnetwork. One indirect way consists in identifying the cell which follows the last cell of a packet cell sequence. When using the AAL5 adaptation layer for segmenting the data packet, this last cell can be detected as being marked by the specific last packet cell indicator in the ATM cell header. Another more explicit way consists in specifying these dedicated first cells as a new type of Resource Management Cell whereby the remaining packet cells are just regular cells following these Resource Management Cells.

The process of packet cell forwarding implies the identification of which output link(s) should be used for transmitting the packet cell sequence towards the egress edge packet routers corresponding to the associated DEERLI identifiers. For each one of these identifiers, the output port to be used is derived by addressing the already mentioned DEERLI translation table memory, the contents of which reflect the current preset hop-by-hop routing conditions. This process can be performed either in the input termination of the cell switching node, or else in a dedicated multicast server device attached to the node.

The dynamic set-up of through-switch transfer mechanisms does not call for specific functionalities for unicast cell transfers to one given output link of a cell switching node. Conversely, they may be needed for performing multicast cell transfers, and this depends on the considered specific type of the cell switch architectures. For switch architectures whereby multicast cell copies are made in the input termination module itself before sending them through the switch fabric, each packet cell sequence is replicated for individual point-to-point through-switch transfer to one of the concerned output links of the node. In other switch architectures, whereby multicast cell copies are made in the switch fabric itself, through-switch transfer mechanisms may have to be dynamically set up for each packet cell sequence, as it is generally not possible to preset in advance all the possible multicast trees in the switch fabric, unless the number of output links is small enough. This is however a challenging requirement and such a capability is not yet present in cell switch fabrics. This could be performed by a dedicated multicast tree control server, which analyzes "on-the-fly" the incoming PFHC header cells, and derives from them the DEERLI identifier bits for determining the concerned output links. Then, this server sends fast multicast tree set-up control messages to the switch fabric for setting up a multicast tree allowing a through-switch point-to-multipoint cell transfer to these concerned output links. Indeed a less challenging requirement, which avoids the need for setting up an appropriate multicast tree for each new multicast cell sequence, would assume, as conventionally used in today's networks, that a reduced number of multicast transfer patterns are predetermined by advance notice, and pre-established by means of multicast control packets, for further transferring multicast packet cell sequences. This less challenging requirement allows time to preset in advance the multicast transfer patterns in the cell switching nodes, but has the drawbacks of restricting the number of preset multicast patterns and of incurring some delay for presetting any new patterns.

Furthermore, in each output termination, the DEERLI identifiers are filtered in the one or more outputted PFHC header cells, so that they only contain the concerned DEERLI identifiers corresponding to the egress edge packet routers to be reached via this outgoing link.

If a bit-based approach is used for expressing the DEERLI identifiers in the DERF field of PFHC header cells, which is especially interesting for multicast transfers in subnetworks possibly comprising a large number (such as several hundred to one thousand) of edge packet routers, one individual ERB bit per DEERLI identifier is used in the DERF field. In this case a mask filtering technique can be used, which consists in filtering bit-by-bit these ERB bits by applying to them a preset filtering mask in which the value of each mask bit indicates whether the related egress edge packet router is currently reachable via this output link. Accordingly, the ERB bit of a given DEERLI identifier received with an active value will be also outputted with an active value if the value of its related mask bit is confirming that the packet cell sequence should reach the egress edge packet router corresponding to this ERB bit via this output link, else the transmitted ERB bit is filtered out by setting its value to inactive.

Such a bit-based approach for expressing the DEERLI identifiers allows multicasting to a large subset (several hundreds) of many edge packet routers in such a large subnetwork. When considering the example of an ATM cell payload comprising 48 bytes, up to 384 ERB bits may be accommodated in the DERF field of one single PFHC header cell for designating as many possible destination edge packet routers in one single multicast packet transfer. However, in practice, some additional fields may be included in the PFHC cell payload, for instance for error correction purposes, such that a practical bound is a maximum of about 350 DEERLI identifiers in each ATM PFHC cell.

For larger subnetworks, more than one PFHC cell can be attributed per packet. By attributing respectively 2 or 3 PFHC cells per packet, this typically results in a limit of about 700 or 1050 edge packet routers which are potentially reachable per multicast transfer in such large subnetworks.

When more than one PFHC cell is used, it is possible to add, within the PFHC cell payload, a PFHC cell number indicator, for instance a two-bit code for a maximum of 4 PFHC cells. Such an explicit PFHC cell number allows to only transmit those PFHC cells which have at least one ERB bit active, but not the useless other ones. Of course this principle is easily extendable for even more PFHC cells and thus cater for even larger subnetworks.

The just described variant methods whereby the DEERLI identifiers are bit-defined, thereby also allows an elegant solution for the above mentioned problem of the updating of these DEERLI identifiers for each output link in a cell switching node. Using the bit-allocation method for the DEERLI identifiers, the latter are then bit-by-bit filtered by applying to them a selective filter mask reflecting all the egress edge routers currently reachable via this branch of the spanning tree, given the current routing conditions. For updating the PFHC to be outputted, the filtered DEERLI identifiers can be obtained by simply AND-ing each received ERB bit with its corresponding mask bit memorized for the concerned output link termination. This process can be preferably performed serially bit-by-bit, when receiving the PFHC payload contents. However parallel processing can also be envisaged.

In addition, in yet another variant of the method, actually combining the aforementioned methods of code-based and bit-based DEERLI identifiers, a separate DEERLI type indicator bit can be provided in the destination forwarding tag of a dedicated first cell such as a PFHC cell, for indicating whether the DEERLI identifiers are bit-based or code-based. In the latter code-based, approach, if 10 or 11 bits for instance are used to encode a DEERLI identifier, a subnetwork can comprise up to 1024 or 2048 edge packet routers respectively. On the one hand, a bit-based definition of DEERLI identifiers provides more flexibility and scalability for addressing a wide range of destination egress edge packet routers for multicast. On the other hand, a code-based definition of DEERLI identifiers may constitute a desirable alternative for some particular applications where the multicast packets only need a moderate number of destination egress edge packet routers.

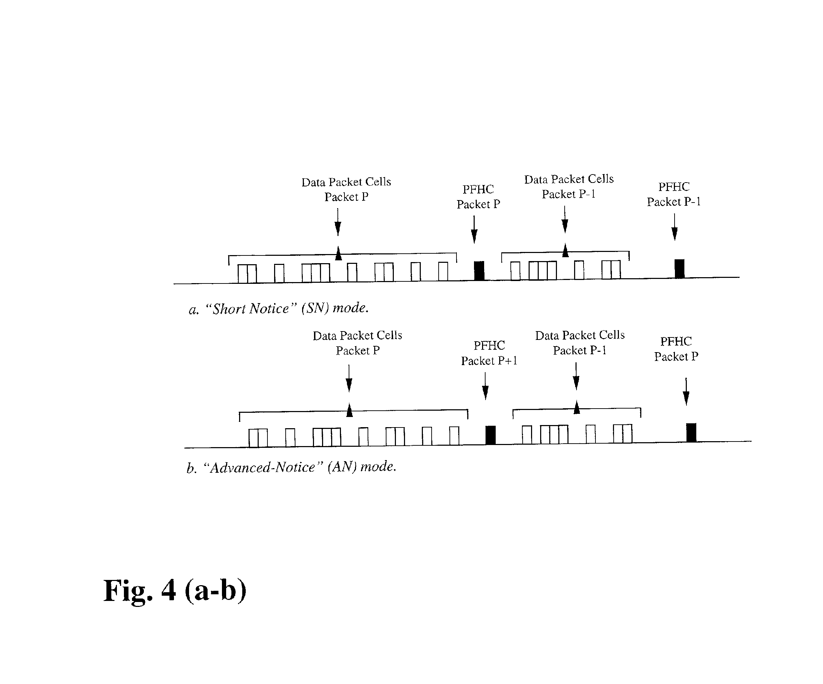

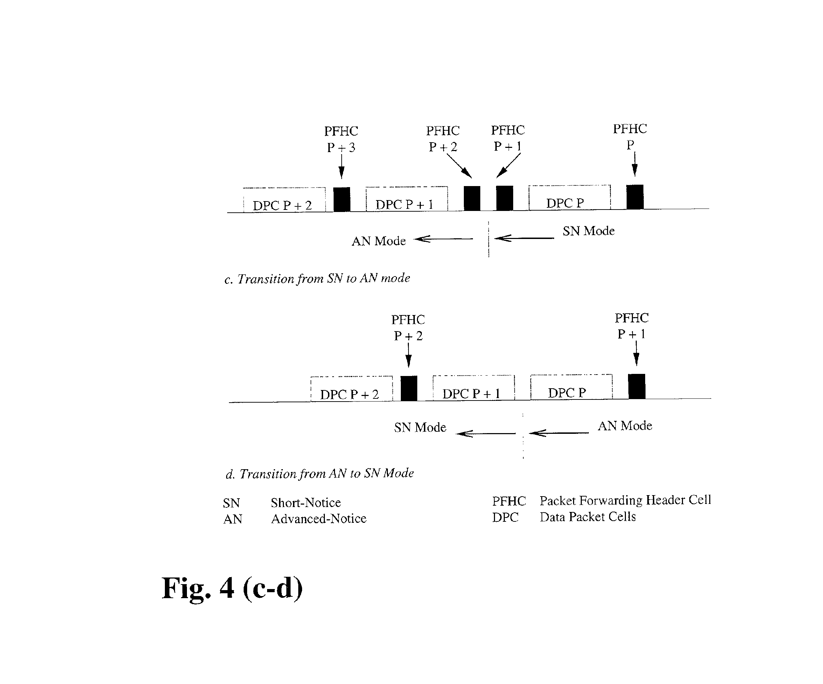

In yet another variant of the method, a solution is foreseen for alleviating the potential delay problem which may result from the increase in processing as was mentioned in a previous paragraph. In order to minimize the detrimental effect of possible additional latency, the one or more dedicated PFHC cells of a packet cell sequence may be sent in advance, for instance before the data packet cells of the previous packet cell sequence. This is schematically illustrated in Fig. 4 for an example with one single PFHC cell, where the top figure (Fig. 4a) shows the first the normal mode, called "short-notice" mode, and Fig. 4b shows this alternative mode, called "advanced-notice" mode.

When receiving a PFHC cell in this advanced-notice mode, much more time is made available in the Cell switching node to get ready for forwarding and outputting the packet cell sequence once subsequent associated data packet cells are received. This advanced-notice mode avoids to introduce additional latency for transferring the corresponding data packet cells. However this mode cannot be used for any packet cell sequence, since it relies on the existence of at least one back-logged packet in some upstream buffer. Thus necessarily, for a first packet not back-logged in an upstream buffer, the normal or short-noticed mode has to be used. This first packet may thus suffer from some additional latency. However, as soon as at least one more packet is waiting in the upstream buffer, the relevant upstream router or node can switch to the advanced-notice mode by transmitting in advance the PFHC cell associated to the subsequent waiting packet cell sequence. When moving from the normal or short-notice mode, to the advanced-notice mode, two different PFHC cells are thus transmitted consecutively, the regular PFHC cell of the current packet cell sequence followed by the PFHC cell of the next packet cell sequence, as illustrated in Fig. 4.c. When moving back from the advanced-notice mode to the short-notice mode, no PFHC cell is to be transmitted between two consecutive strings of data packet cells, as illustrated in Fig. 4.d.

Such a dual operation mode (short/advanced notice) is easily implementable if PFHC cells are explicitly characterized such that their presence between two data packet cell sequences can be unambiguously detected. In this case, to further provide adequate protection against cell loss (of a PFHC cell, or of the last cell of a data packet), a PFHC sequence number is to be added in each PFHC cell. In case the PFHC cells would be only implicitly characterized, such a protection against cell loss is more difficult to achieve.

A further variant may consist in adding a time-to-leave, abbreviated with TTL, field in the PFHC cell, for protecting against packet loops in the network due to transient erroneous routing conditions. This principle is commonly used in connectionless packet transfer protocols based on hop-by-hop forwarding, such as in the Internet Protocol. To be compliant with this, the subject method thus foresees an initial TTL value to be inserted within the PFHC cell, by the ingress edge packet router. At each cell switching node, the TTL value is decremented. If the TTL value reaches zero, this is indicative that the packet was abnormally forwarded by too many switches and will as such be discarded.

The proposed principle of destination-based packet cell forwarding thus allows to multiplex on the same link, for instance a virtual link characterized by its VPI/VCI value in the example of ATM, various packet cell sequences not having necessarily the same single or multiple egress edge packet routers as destinations, but which are all transmitted over that same link for reaching these different destinations. In other words, one does not have to segregate unicast as well as multicast packet cell sequences on different links, depending on their respective destinations.

When comparing this hop-by-hop packet cell forwarding method with a conventional connection-oriented cell switching method, typically based on the standard ATM model, it can be proved that no additional virtual links are needed when using this hop-by-hop forwarding solution in case the intermediate cell switching nodes are capable of packet merging. With this packet merging capability, it is to be understood that these cell switching nodes are capable of properly controlling the output cell multiplexing to an individual link (for instance an ATM VPI/VCI virtual link) on a packet-by-packet basis, without interleaving cells belonging to different packet cell sequences, so that packet cell sequences originating from different ingress edge packet routers can be merged on the same single link. Then such a single link can then be effectively "source independent". Therefore, when comparing point-to-point transfers of unicast packets between the N edge packet routers of an ATM subnetwork, using either the packet cell forwarding method or the connection oriented cell switching method, it can be shown that, in the case where the cell switching nodes are capable of packet merging, the resulting number of ATM virtual links (VPI/VCI values) is merely one for the packet cell forwarding method, whilst N ATM virtual links (one per egress edge packet router) are conventionally required when using the connection-oriented cell switching method. In the case where the cell switching nodes are not capable of packet merging capability, N ATM virtual links (one per ingress edge packet router) are sufficient for the packet cell forwarding method, whilst N x (N-1) ATM virtual links (one from each ingress edge packet router to each one of (N-1) egress edge packet routers) are conventionally required when using the connection-oriented cell switching method.

Moreover, for point-to-multipoint transfers of multicast packets, a major advantage of the proposed packet cell forwarding method is that no additional ATM virtual links are needed beyond the minimal number of links needed for unicast transfers, whereas as many additional ATM virtual links as possible different multicast connections are required when using the connection-oriented cell switching method.

In addition to the proposed dynamic packet cell forwarding capability, a cell switching node can be provided with the classical connection-oriented cell switching capability. In this way, one or the other capability is pre-assigned to each virtual link, depending on the value of a Forwarding/Switching Mode, abbreviated with FSM, indicator associated to each respective virtual link, for instance to each VPI/VCI value in the example of an ATM physical link termination. Accordingly, in any link termination of such an ATM cell switching node, some ATM virtual links (VPI/VCI) may be used as proposed in ATM packet cell forwarding mode, whereas other ATM virtual links (VPI/VCI) of the same ATM physical link may be separately used in classical ATM connection-oriented cell switching mode.

Furthermore, in another variant method of this invention, the additional capability of change-over from dynamic packet cell forwarding, abbreviated with PCF, mode to steady-state connection-oriented cell switching, abbreviated with CS, mode is introduced. This change is thereby requested by the ingress edge packet router in the PFHC cell of a packet cell sequence transmitted on virtual link so far used in PCF forwarding mode. For this, the PFHC cell contains an additional switching mode set-up control, denoted SMSC, indicator for triggering, when active, the connection-oriented CS switching mode. By doing so an ingress edge packet router can instruct to set up an individual unicast or multicast connection to the concerned destination egress edge packet routers designated by the DEERLI identifiers in the PFHC cells of this packet cell sequence. Then, when receiving on a virtual link a packet cell sequence with an active SMSC indicator in its PFHC cell, a cell switching node sets the FSM indicator associated to that virtual link to a value corresponding to the CS switching mode, and it establishes a cell switching connection over the forwarding path that it selects on the basis of the DEERLI identifiers in the PFHC cell. Then all subsequent cells of packet cell sequences received over that virtual link set in CS switching mode will be classically switched cell-by-cell over this cell switching connection steadily established between these routers.

As this changed virtual link is now used to constitute a dedicated part of the established router-to-router cell switching connection, it is then no longer available for dynamically forwarding packets to be transferred to other egress edge packet routers, so that another virtual link now needs to be used for that purpose. In the example of an ATM physical link, a group of available ATM virtual links (VPI/VCI values) is in fact preset between a pair of adjacent nodes, in which at least one of these ATM virtual links is used for dynamic ATM packet cell forwarding, and the other remaining virtual ATM virtual links are provided for dedicated router-to-router cell switching connections in CS switching mode. Therefore, for changing an ATM virtual link (VPI/VCI) from ATM packet cell forwarding mode to ATM cell switching mode, another free ATM virtual link is selected by the upstream node for maintaining the ATM packet cell forwarding capability over that ATM physical link.

It is to be noticed that, instead of setting up a cell switching connection over a virtual link previously used in packet cell forwarding mode and now changed to cell switching mode, and of selecting another free virtual link for subsequent packet cell forwarding mode, an alternative equivalent method consists in keeping the same default virtual link for packet cell forwarding and selecting another free virtual link for setting up a cell switching connection using the cell switching mode.

Complementary, the ingress edge packet router can instruct the release of a router-to-router cell switching connection on a virtual link so far used in cell switching mode. For this, the PFHC cell contains an additional switching mode release control, abbreviated with SMRC, indicator for triggering, when active, the packet cell forwarding mode. Then, when receiving on a virtual link a packet cell sequence with an active SMRC indicator in its PFHC cell, a cell switching node releases the previously established cell switching connection, and it sets the FSM indicator associated to that virtual link to a value corresponding to the packet cell forwarding mode. Then all subsequent cells of the packet cell sequence, as well as subsequent ones, received over that virtual link are then forwarded in packet cell forwarding mode.
Besides, in cell switching mode, a PFHC cell does not need to be added to each transmitted packet in packet cell sequences if the PFHC cells are characterized explicitly, so that they can still be detected within a flow of packet cell sequences, in particular when needed for indicating a request for releasing the cell switching connection. The usual principle of "hard" connection state can be used, in which case the established connection remains established until it is explicitly released. Yet this mechanism also allows the alternative use of a "soft" connection state whereby the latter is periodically refreshed in order to cater for possible routing changes in the network. For doing so, an ingress edge packet router is further adapted to ensure that, for data packets transferred over an already established said cell switching connection, it periodically associates said switching mode set-up control (SMSC) indicator to at least one data packet within a predetermined connection refresh time interval (CRTI), so that, in the case where said connection is treated as a soft connection of limited time duration by the cell switching nodes in said subnetwork, said soft connection should be re-established for an extended duration corresponding to said time interval (CRTI) each time a data packet is transmitted with an active said switching mode set-up control (SMSC) indicator, or else, in absence of such a data packet transmitted during one said time interval (CRTI), said soft connection should be released and said packet cell forwarding mode should be now resumed for forwarding the successive packet cell sequences between the ingress edge packet router and at least one destination egress edge packet router. Similarly the cell switching node are to be further adapted, in the case where said cell switching connection (CSC) is treated as a soft connection of limited time duration, to monitor the holding time of said soft connection, for each virtual link for which the value of its associated said forwarding/switching mode (FSM) indicator indicates that said cell switching (CS) mode is active, by performing a time-out over said predetermined connection refresh time interval (CRTI), in such a way that said soft connection is kept established for an extended duration corresponding to said time interval (CRTI) each time an active said switching mode set-up control (SMSC) indicator is detected in said packet cell sequence received over said virtual link, or else, if said time-out expires, that said soft connection is released over the previously established cell switching path, and that said forwarding/switching mode (FSM) indicator associated to said virtual link is set to a value indicating a packet cell forwarding (PCF) mode, so that all cells of said each packet cell sequence received over said virtual link are then forwarded, on the basis of said destination forwarding tag, towards said at least one destination egress edge packet router (DEEPR).

In other words, at least one PFHC cell is to be periodically included in a packet cell sequence transferred over the cell switching connection, and each cell switching node detecting a PFHC cell with an active SMSC indicator has the opportunity to re-establish the cell switching connecting over a forwarding path that it selects on the basis of the DEERLI identifiers, as though it were the first one used to set up the connection. If the routing conditions are still the same, the same cell switching connection state is simply refreshed. If they have changed, a different rerouted cell switching connection is automatically established and the unused part of the previous cell switching connection is released. In each cell switching node, such a periodic refreshment mechanism of soft cell switching connection states is combined with a guard time-out over a predetermined connection refresh time interval (CRTI) for each virtual link in cell switching mode, such that the soft CSC connection is kept established, for an extended duration corresponding to the CRTI time interval, each time an active SMSC indicator is detected in a packet cell sequence received over the virtual link, or else such that, if the time-out expires in absence of refreshment PFHC cell received in due CRTI time period, the cell switching connection is automatically released over the previously established cell switching path. As in the case of an explicitly requested cell switching connection release, the cell switching node sets the FSM indicator associated to that virtual link to a value corresponding to the packet cell forwarding mode, and then all subsequent cells of the packet cell sequence, as well as subsequent ones, received over that virtual link are then forwarded in packet cell forwarding mode.

The decision for an ingress edge packet router ingress edge packet router to request the set-up of such a dedicated cell switching connection to one or more egress edge packet routers egress edge packet routers through a subnetwork can be motivated by different types of router-to-router connection usage, such as for supporting connectionless IP packet communications which may be either semi-permanent connections selected on the basis of topology considerations, or dynamic connections allocated to identified intensive packet flows. Also supporting on-demand connection-oriented IP packet, on the basis of user-to-user connection requests, usually for providing quality of service guarantee, may also serve as a basis for requesting a dedicated switched connection session which was previously running in forwarding mode.

Thus for all these router-to-router connection usage cases, the proposed packet cell forwarding mechanism also supports the capability to set up under request any unicast or multicast router-to-router connection in a flexible way for achieving optimal network throughput performance.

While the principles of the invention have been described above in connection with specific apparatus, it is to be clearly understood that this description is made only by way of example and not as a limitation on the scope of the invention, as defined in the appended claims.

## Claims

1. Method for forwarding a data packet within a subnetwork (S) which comprises a first plurality of interconnected cell switching nodes (1,2,3,4), surrounded by and coupled to a second plurality (A,B,C,D,E) of edge packet routers included in said subnetwork, said subnetwork further being surrounded and part of a data packet network of routers which are adapted to route said data packet from a source router to at least one destination router of said data packet network of routers, via said subnetwork from an ingress edge packet router (B) , at least one cell switching node (1) of said second plurality, to at least one destination egress edge packet router (A,C,D,E) of said second plurality, said method including
- a step of associating, a destination forwarding tag to said data packet,
- a further step of deriving, from said data packet and said destination forwarding tag, a sequence of fixed length cells for further transmission to said at least one cell switching node (1) of said first plurality,
- and a further step of dynamically analyzing, within said at least one cell switching node (1) of said first plurality, said destination forwarding tag for elaborating a packet cell forwarding decision applicable to all cells of said sequence, and for thereby performing a subsequent transfer action of said all cells, to at least one outgoing link of said at least one cell switching node (1), according to said forwarding decision,
- whereby to each one of the edge packet routers (A,B,C,D,E) of said second plurality a distinct local edge router identity, specific of said subnetwork (S), is assigned , and
- whereby said destination forwarding tag includes at least one destination egress edge router local identifier which is related to said distinct local edge router identity assigned to said at least one destination egress edge packet router (A,C,D,E).

2. Method according to claim 1
**characterized in that**,
said sequence of cells is derived by setting said at least one destination egress edge router local identifier in a first cell or first cells of said sequence and by setting said data packet separately in the payload part of cells following said first cell or cells of said sequence, such that said at least one dedicated header cell is dedicated to the transport of said data packet to said at least one destination egress edge packet router.

3. Method according to claim 2
**characterized in that**
said sequence of cells is derived by setting said at least one destination egress edge router local identifier in the header part of said first cell or first cells of said sequence, and setting said data packet in the payload part of all successive cells of said sequence.

4. Method according to claim 1
**characterized in that**
said sequence of cells is derived by setting said at least one destination egress edge router local identifier and said data packet, both consecutively **in that** order, in the payload part of successive cells of said sequence.

5. Method according to claim 1
**characterized in that**
said destination forwarding tag comprises a sequence of edge router bits, each distinct bit position of said bit sequence thereby being associated to said distinct local edge router identity assigned to each one of the edge packet routers of said second plurality, the value of said each bit being indicative of whether said local edge packet router identity associated to said bit corresponds to said at least one destination egress edge packet router local identifier of a destination egress edge packet router to which said data packet is to be forwarded.

6. Method according to claim 1,
**characterized in that**
said destination forwarding tag comprises at least one destination egress edge router code respectively constituting at least one destination egress edge router local identifier, each distinct code present in said list thereby being related to said distinct local edge router identity assigned to said at least one destination egress edge packet router to which said data packet is to be forwarded.

7. Method according to claim 1,
**characterized in that**,
for transmitting said packet cell sequence over a given outgoing link within said subnetwork, said destination forwarding tag, comprising said at least one destination egress edge router local identifier, is filtered so that, after this filtering process, each local edge router identity which remains validated in said destination forwarding tag, is assigned to an edge packet router, of said second plurality, which is a remaining destination egress edge packet router to which said data packet is to be forwarded over said given outgoing link.

8. Method according to claim 1,
**characterized in that**
said destination forwarding tag forms part of one or more first cells of said packet cell sequence, which are transmitted in advance of the following cells of said packet cell sequence.

9. Method according to claim 8,
**characterized in that**,
when said at least one first cell of a packet cell sequence is transmitted in advance, it precedes the last cells of the previous packet cell sequence which do not contain the destination forwarding tag of that previous packet cell sequence.

10. Ingress edge packet router (B) of a subnetwork (S), which comprises a first plurality of interconnected cell switching nodes (1,2,3,4), surrounded by and coupled to a second plurality of edge packet routers (A,B,C,D,E) included in said subnetwork (S) and of which said ingress edge packet router (B) forms part, said subnetwork (S) further being surrounded and part of a data packet network of routers which are adapted to route a data packet from a source router to a destination router of said data packet network of routers, via said ingress edge packet router (B) to at least one destination egress edge packet router (D) of said second plurality, said ingress edge packet router being adapted to receive said data packet from said data packet network, and to associate to said data packet a destination forwarding tag relating to said at least one destination egress edge packet router (D) of said second plurality, to further derive, from said data packet and from said destination forwarding tag, a sequence of fixed length cells for further transmitting this packet cell sequence to at least one cell switching node (1) of said first plurality,
**characterized in that**
said ingress edge packet router (B) is further adapted to assign, to each one of the edge packet routers of said second plurality, a distinct local edge router identity which is specific to said subnetwork (S), so that said destination forwarding tag, associated to said data packet, includes at least one destination egress edge router local identifier which is related to said distinct local edge router identity assigned to this said at least one destination egress edge packet router (D).

11. Ingress edge packet router (B) according to claim 10
**characterized in that**
said ingress edge packet router (B) is further adapted to derive said sequence of fixed length cells such that at least one dedicated first cell includes said destination forwarding tag comprising said at least one destination egress edge router local identifier.

12. Ingress edge packet router (B) according to claim 11
**characterized in that**
said ingress edge packet router (B) is further adapted to generate said destination forwarding tag comprising said at least one destination egress edge router local identifier, in at least one dedicated first cell, as a sequence of edge router bits, whereby each distinct bit position of said bit sequence is associated to said distinct local edge router identity assigned to each one of the edge packet routers of said second plurality (A,B,C,D,E), and whereby the value of said each bit is indicative of whether said distinct local edge router identity associated to said bit corresponds to said at least one destination egress edge packet router local identifier of a destination egress edge packet router (D) to which said packet cell sequence should be forwarded.

13. Ingress edge packet router (B) according to claim 11
**characterized in that**, for transmitting said packet cell sequence over an outgoing link, said ingress edge packet router (B) is further adapted to transmit said at least one dedicated first cell of said packet cell sequence in advance of the following data cells derived from said data packet.

14. Ingress edge packet router (B) according to claim 13
**characterized in that**
said ingress edge packet router (B) is further adapted to transmit said at least one dedicated first cell of said packet cell sequence in advance of the following data cells derived from the previous data packet transmitted over said outgoing link.

15. Ingress edge packet router (B) according to claim 11
**characterized in that**
said ingress edge packet router (B) is further adapted to insert a time-to-leave field in said at least one dedicated first cell .

16. Ingress edge packet router (B) according to claim 10
**characterized in that**
said ingress edge packet router (B) is further adapted to associate a switching mode set-up control indicator to at least one data packet, indicating when active that a cell switching connection should be set up through said subnetwork (S) , between said ingress edge packet router (B) and said at least one destination egress edge packet router (D), so that, instead of a packet cell forwarding mode, a cell switching mode is used, for the concerned output link, for switching the cells of successive packet cell sequences over said connection between said ingress edge packet router (B) and said at least one destination egress edge packet router (D).

17. Ingress edge packet router (B) according to claim 16
**characterized in that**
said ingress edge packet router (B) is further adapted to associate a switching mode release control indicator to at least one data packet, indicating when active that said cell switching connection, previously established through said subnetwork (S), should be released, and that said packet cell forwarding mode should now be resumed for forwarding the successive packet cell sequences between said ingress edge packet router (B) and said at least one destination egress edge packet router (D).

18. Cell switching node (1;4) of a subnetwork (S) which comprises a first plurality of interconnected cell switching nodes (1,2,3,4) of which said cell switching node (1;4) forms part, said plurality being surrounded by and coupled to a second plurality of edge packet routers (A,B,C,D,E) included in said subnetwork (S), said subnetwork (S) further being surrounded and part of a data packet network of routers which are adapted to route said data packet from a source router to a destination router of said data packet network of routers, via an ingress edge packet router (B) of said second plurality to at least one destination egress edge packet router (A,C,D;E) of said second plurality, whereby said cell switching node (1;4) is adapted to receive, either from an ingress edge packet router (B) or from another cell switching node (1) of said subnetwork (S), a packet cell sequence, to elaborate a forwarding decision applicable to all cells of said sequence for transferring all of said cells to at least one outgoing link of said cell switching node (1;4) according to said forwarding decision, and to perform a packet cell forwarding operation based upon a destination forwarding tag present in one or more cells of said cell packet sequence, said destination forwarding tag including at least one destination egress edge router local identifier which is related to a distinct local edge router identity specifically assigned to said at least one destination egress edge packet router (A,C,D;E) within said subnetwork (S).

19. Cell switching node (1;4) according to claim 18
**characterized in that**,
said cell switching node (1:4) is further adapted to perform a filtering operation on said destination forwarding tag, comprising said at least one destination egress edge router local identifier, so that, after this filtering process, each local edge router identity which remains validated in said destination forwarding tag, is assigned to an edge packet router (C,D), of said second plurality, which is a remaining destination egress edge packet router to which said data packet is to be forwarded over said given outgoing link.

20. Cell switching node (1;4) according to claim 18
**characterized in that**
said cell switching node (1;4) is further adapted to also perform a cell switching operation on individual fixed length cells transferred over the virtual link of an established cell switching connection, to associate a forwarding/switching mode indicator to each virtual link, and to determine therefrom whether the cells received over said virtual link have to be handled either in said packet cell forwarding mode, or in said cell switching mode, depending on the value of said forwarding/switching mode indicator associated to said virtual link.

21. Cell switching node (1;4) according to claim 20
**characterized in that**,
said cell switching node (1;4) is further adapted, upon detecting said switching mode set-up control indicator in active condition in said packet cell sequence received over a virtual link, to establish said cell switching connection over the forwarding path that it selects on the basis of said destination forwarding tag, and to set said forwarding/switching mode indicator associated to said virtual link to a value indicating an active cell switching mode, so that all cells received over said virtual link are then individually switched over said cell switching connection towards said at least one destination egress edge packet router (A,C,D;E).

22. Cell switching node (1;4) according to claim 21
**characterized in that**,
said cell switching node (1;4) is further adapted, upon detecting said switching mode release control indicator in active condition in said packet cell sequence received over a virtual link, to release said cell switching connection over the previously established cell switching path, and to set said forwarding/switching mode indicator associated to said virtual link to a value indicating an active packet cell forwarding mode, so that all cells of said each packet cell sequence received over said virtual link are then forwarded, on the basis of said destination forwarding tag, towards said at least one destination egress edge packet router (A,C,D;E).
